# EUROPÄISCHE PATENTANMELDUNG

(11) **EP 3 805 427 A1**
(43) Veröffentlichungstag der Anmeldung: **14.04.2021**
(21) Anmeldenummer: 19202766.2
(22) Anmeldetag: 11.10.2019
(51) Int. Cl.: C25B 1/04, F17C 5/00

(54) **VORRICHTUNG UND VERFAHREN ZUM BETANKEN EINES FORTBEWEGUNGSMITTELS**

(71) Anmelder: Siemens Aktiengesellschaft, 80333 München (DE)
(72) Erfinder: Dornauer, Marco, 90562 Heroldsberg (DE); Wolf, Erik, 91341 Röttenbach (DE)

(57) **Zusammenfassung**

Die Erfindung betrifft eine Betankungsvorrichtung zum Betanken eines Fortbewegungsmittels. Die Betankungsvorrichtung umfasst wenigstens einen ersten Eingang für einen stofflichen Energieträger und/oder wenigstens einen zweiten Eingang für elektrische Energie. Sie umfasst weiterhin wenigstens eine erste Wandlervorrichtung zum Wandeln des stofflichen Energieträgers in elektrische Energie und/oder wenigstens eine zweite Wandlervorrichtung zum Wandeln eines Edukts mittels elektrischer Energie in den stofflichen Energieträger. Die Vorrichtung umfasst weiterhin wenigstens eine erste mit dem Fortbewegungsmittel verbindbaren Anschlussvorrichtung zum Übertragen elektrischer Energie. Sie umfasst auch wenigstens eine zweite mit dem Fortbewegungsmittel verbindbare Anschlussvorrichtung zum Überführen eines synthetischen Kraftstoffs umfassend den stofflichen Energieträger von der Vorrichtung in das Fortbewegungsmittel. Die Erfindung betrifft auch ein Verfahren zum Betreiben der Betankungsvorrichtung.

## Beschreibung

Die Erfindung betrifft eine Vorrichtung und ein Verfahren zum Betanken eines Fortbewegungsmittels.

Die globale Erwärmung beschreibt den Anstieg der Durchschnittstemperatur der erdnahen Atmosphäre und der Meere seit Beginn der Industrialisierung. Es handelt sich um einen Klimawandel durch menschengemachte Einflüsse.

Die Klimaerwärmung ist insbesondere auch auf die in der Atmosphäre steigende Kohlenstoffdioxidkonzentration zurückzuführen.

Es ist daher wünschenswert den Ausstoß von Kohlenstoffdioxid zu reduzieren oder, im Idealfall, zu vermeiden.

Ein Senken des Kohlenstoffdioxidausstoßes kann insbesondere auch durch den Einsatz alternativer Antriebskonzepte im Mobilitätssektor erreicht werden. Derzeit werden insbesondere elektrisch betriebene Fortbewegungsmittel als mögliche Alternative zu Antrieben mit fossilem Brennstoff angesehen. Zusätzlich werden aber auch synthetische Kraftstoffe, insbesondere Wasserstoff, für Fortbewegungsmittel zur Verfügung stehen.

Derzeit werden diese beiden Konzepte häufig getrennt voneinander verfolgt: Elektrische Ladesäulen werden unabhängig von Tankstellen verortet. Nachteilig werden so nebeneinander mehrere unabhängige Infrastrukturen aufgebaut, was deren Aufbau nachteilig komplex macht.

Es ist daher Aufgabe der Erfindung eine Vorrichtung zum Betanken von Fortbewegungsmitteln mit unterschiedlichen Antrieben anzugeben, welche die Infrastruktur der Betankungssysteme vereinfacht. Weiterhin ist es Aufgabe der Erfindung ein Verfahren zum Betreiben solch einer Vorrichtung anzugeben.

Die Aufgabe wird mit einer Vorrichtung gemäß Anspruch 1 und einem Verfahren gemäß Anspruch 11 gelöst.

Die erfindungsgemäße Betankungsvorrichtung zum Betanken eines Fortbewegungsmittels umfasst wenigstens einen ersten Eingang für einen stofflichen Energieträger und/oder wenigstens einen zweiten Eingang für elektrische Energie. Sie umfasst weiterhin wenigstens eine erste Wandlervorrichtung zum Wandeln des stofflichen Energieträgers in elektrische Energie und/oder wenigstens eine zweite Wandlervorrichtung zum Wandeln eines Edukts mittels elektrischer Energie in den stofflichen Energieträger. Die Betankungsvorrichtung umfasst weiterhin wenigstens eine erste, mit dem Fortbewegungsmittel verbindbaren, Anschlussvorrichtung zum Übertragen elektrischer Energie. Sie umfasst weiterhin wenigstens eine zweite, mit dem Fortbewegungsmittel verbindbaren, Anschlussvorrichtung zum Überführen eines synthetischen Kraftstoffs umfassend den stofflichen Energieträger in das Fortbewegungsmittel.

Das erfindungsgemäße Verfahren zum Betreiben einer Betankungsvorrichtung zum Betanken eines Fortbewegungsmittels umfasst das Bereitstellen der Betankungsvorrichtung mit wenigstens einem ersten Eingang für einen stofflichen Energieträger und/oder wenigstens einem zweiten Eingang für elektrische Energie. Die Betankungsvorrichtung umfasst weiterhin wenigstens eine erste Wandlervorrichtung zum Wandeln des stofflichen Energieträgers in elektrische Energie und/oder wenigstens eine zweite Wandlervorrichtung zum Wandeln eines Edukts mittels elektrischer Energie in den stofflichen Energieträger. Die Betankungsvorrichtung umfasst weiterhin wenigstens eine erste, mit dem Fortbewegungsmittel verbindbare, Anschlussvorrichtung zum Übertragen elektrischer Energie. Die Betankungsvorrichtung umfasst auch wenigstens eine zweite, mit dem Fortbewegungsmittel verbindbare, Anschlussvorrichtung zum Überführen eines synthetischen Kraftstoffs umfassend den stofflichen Energieträger in das Fortbewegungsmittel. In die Betankungsvorrichtung wird anschließend in den ersten Eingang ein stofflicher Energieträger geführt und/oder in den zweiten Eingang wird elektrische Energie zugeführt. Zeitgleich oder zeitversetzt wird wenigstens ein Fortbewegungsmittel mit der Betankungsvorrichtung über die erste und/oder zweite Anschlussvorrichtung verbunden. Anschließend erfolgt das Übertragen von elektrischer Energie und/oder von synthetischem Kraftstoff von der Betankungsvorrichtung in das Fortbewegungsmittel.

Vorteilhaft ist es möglich, mit derselben Betankungsvorrichtung sowohl elektrische Energie als auch Kraftstoffe, insbesondere synthetische Kraftstoffe, in ein Fortbewegungsmittel zu überführen. Vorteilhaft wird die Infrastruktur an Tankvorrichtungen einfach gehalten. Es ist vorteilhaft nicht nötig unterschiedliche Infrastrukturen für Tankstellen für Fortbewegungsmittel mit Elektroantrieben, fossilen Antrieben und Antrieben mit synthetischen Kraftstoffen zu errichten. Erfindungsgemäß werden all diese Tankstellen in einer Vorrichtung integriert. Die Auswahl von geeigneten Tankstellen wird für den Verbraucher vorteilhaft übersichtlich und wenig komplex gehalten. Es ist für den Verbraucher nicht nötig, für unterschiedliche Antriebstechniken des Fortbewegungsmittels unterschiedliche Tankstellen anfahren zu müssen. Weiterhin können vorteilhaft Synergie-Effekte zwischen den unterschiedlichen Energieformen genutzt werden. Dies geschieht insbesondere durch die erste und zweite Wandlervorrichtung. Diese sind geeignet, um entweder elektrische Energie in einen stofflichen Energieträger umzuwandeln oder einen stofflichen Energieträger in elektrische Energie umzuwandeln. Vorteilhaft kann somit in Abhängigkeit des Bedarfs an Kraftstoff oder elektrischer Energie diejenige Energieform bereitgestellt werden, die aktuell vom Verbraucher oder dem Stromnetz benötigt wird.

In einer vorteilhaften Ausgestaltung und Weiterbildung der Erfindung ist der stoffliche Energieträger Wasserstoff. Vorteilhaft können somit wasserstoffbetriebene Fortbewegungsmittel und Fortbewegungsmittel mit Brennstoffzellen mit der Betankungsvorrichtung betankt werden.

In einer weiteren vorteilhaften Ausgestaltung und Weiterbildung der Erfindung ist die erste Wandlervorrichtung eine Brennstoffzelle. Vorteilhaft ermöglicht die Brennstoffzelle das Umwandeln des Wasserstoffs zu elektrischem Strom. Somit kann in dieser Ausführungsform auf das Zuführen von elektrischem Strom in den zweiten Eingang verzichtet werden. Weiterhin kann bedarfsabhängig elektrische Energie aus Wasserstoff hergestellt werden. Die Herstellung kann nicht nur bedarfsabhängig erfolgen, sondern auch davon abhängen, welche Menge Wasserstoff zur Verfügung steht. Insbesondere in Zeiten mit viel Überschussenergie, d. h. in Zeiten mit viel Wind und/oder viel Sonne, kann diese Überschussenergie in Form von Wasserstoff gespeichert werden. Dieser Wasserstoff kann anschließend direkt in ein Fortbewegungsmittel überführt werden oder in elektrische Energie umgewandelt werden.

In einer weiteren vorteilhaften Ausgestaltung und Weiterbildung der Erfindung ist das Edukt Wasser und die zweite Wandlervorrichtung eine Wasser-Elektrolysevorrichtung. Die Wasser-Elektrolysevorrichtung dient dem elektrochemischen Zerlegen von Wasser zu Wasserstoff und Sauerstoff. Vorteilhaft kann in dieser Ausführungsform die Betankungsvorrichtung selbst als eine Speichervorrichtung von Energie dienen. Überschüssiger Strom, insbesondere in Zeiten mit viel Sonne und viel Wind, kann mittels der Wasser-Elektrolysevorrichtung genutzt werden, um aus Wasser den Energieträger Wasserstoff herzustellen. Vorteilhaft kann in dieser Ausführung darauf verzichtet werden, den stofflichen Energieträger, insbesondere Wasserstoff, direkt in die Betankungsvorrichtung zu führen.

In einer weiteren vorteilhaften Ausgestaltung und Weiterbildung der Erfindung umfasst die Vorrichtung einen Stromrichter. Dieser Stromrichter kann ein Wechselrichter oder ein Gleichrichter sein. Für den Fall, dass die Brennstoffzelle mittels des Energieträgers Wasserstoff Gleichstrom erzeugt, kann ein Wechselrichter eingesetzt werden, um Fahrzeuge mit Wechselstrom betanken zu können. Für den Fall, dass Wechselstrom in die Vorrichtung geführt wird, kann ein Gleichrichter eingesetzt werden, um Gleichstrom zu erzeugen und diesen an ein Fortbewegungsmittel zu übertragen. Vorteilhaft können an der Vorrichtung somit Fortbewegungsmittel mittels Gleichstroms oder Wechselstroms mit elektrischer Energie geladen werden.

In einer weiteren vorteilhaften Ausgestaltung und Weiterbildung der Erfindung umfasst die Betankungsvorrichtung eine erste Speichervorrichtung für elektrische Energie. Die erste Speichervorrichtung ist insbesondere eine Batterie. Die erste Speichervorrichtung kann auch ein Kondensator oder ein Schwungradspeicher sein. Vorteilhaft kann somit elektrische Energie in der Betankungsvorrichtung gespeichert werden. Besonders vorteilhaft ist es, die Batterie mit Gleichstrom zu laden und zu entladen. In der Batterie kann insbesondere elektrische Energie, welche mittels der Brennstoffzelle aus Wasserstoff hergestellt wurde, gespeichert werden. Es ist aber ebenso möglich, elektrische Energie aus dem Stromnetz zu speichern. Insbesondere kann die Batterie auch zum Stabilisieren des Stromnetzes genutzt werden, um lokale Schwankungen des Netzes ausgleichen zu können.

In einer weiteren vorteilhaften Ausgestaltung und Weiterbildung der Erfindung umfasst die Vorrichtung eine zweite Speichervorrichtung zum Speichern des synthetischen Kraftstoffs, insbesondere umfasst sie einen Wasserstofftank. Vorteilhaft ist es in dieser Ausführungsform möglich, dass der Betankungsvorrichtung lediglich Wasserstoff aus dem Wasserstofftank zugeführt wird. Mittels der Brennstoffzelle kann der Wasserstoff in elektrische Energie umgewandelt werden. Die Betankungsvorrichtung kann somit unterschiedlichste Fortbewegungsmittel betanken. Ebenso ist es vorteilhaft möglich, dass die Vorrichtung elektrische Energie für weitere elektrische Verbraucher, insbesondere auch für einzelne Häuser oder Kleinsiedlungen, bereitstellt.

In einer weiteren vorteilhaften Ausgestaltung und Weiterbildung der Erfindung wird nach dem Verbinden des Fortbewegungsmittels mit der Betankungsvorrichtung ein Energiespeicher des Fortbewegungsmittels, insbesondere einer Batterie, zur Stabilisierung eines Stromnetzes entleert. Vorteilhaft ermöglicht die Vorrichtung somit, das Stromnetz bei Schwankungen zu stabilisieren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:
- Figur 1: eine Betankungsvorrichtung mit einem Wasserstoffeingang, einer Brennstoffzelle und Fahrzeugen;
- Figur 2: eine Betankungsvorrichtung mit einem Wasserstoffeingang, einem Eingang für elektrische Energie und einer Brennstoffzelle;
- Figur 3: eine Betankungsvorrichtung mit einem Wasserstoffeingang, einem Eingang für elektrische Energie, einer Brennstoffzelle und einer Batterie;
- Figur 4: eine Betankungsvorrichtung mit einem Wasserstoffeingang, einem Eingang für elektrische Energie, einer Brennstoffzelle, einer Batterie und einem Fahrzeug;
- Figur 5: eine Betankungsvorrichtung mit einem Wassereingang, einem Eingang für elektrische Energie und einer Wasser-Elektrolysevorrichtung;
- Figur 6: eine Betankungsvorrichtung mit einem Wasserstoffeingang, einer Brennstoffzelle und einem Wechselrichter.

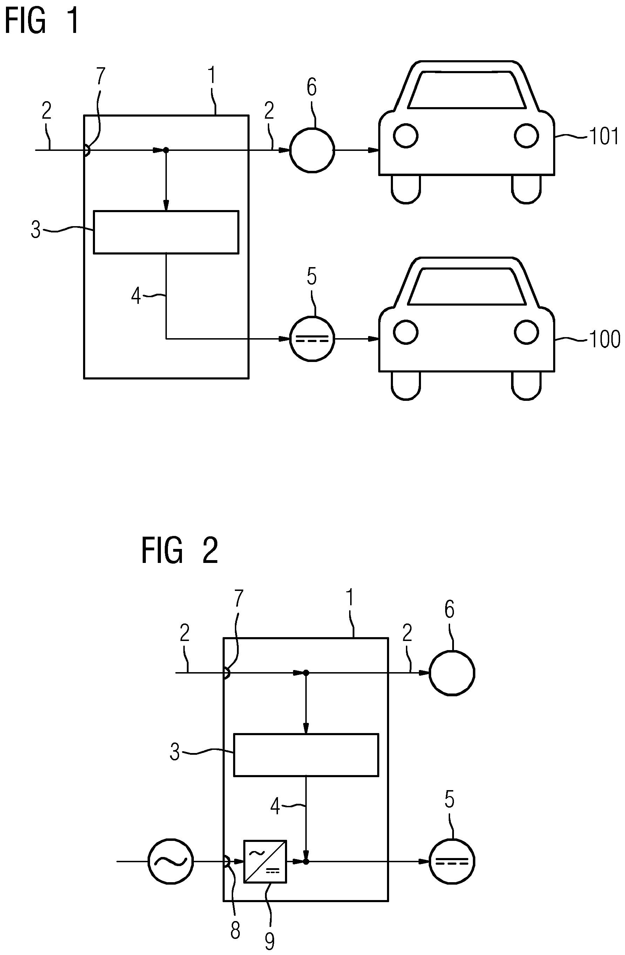

Figur 1 zeigt eine Betankungsvorrichtung 1 mit einer Brennstoffzelle 3. Die Betankungsvorrichtung 1 weist einen ersten Eingang 7 auf. Durch den ersten Eingang 7 wird Wasserstoff 2 in die Betankungsvorrichtung 1 geführt. Ein Teil des Wasserstoffs 2 wird direkt zu einer zweiten Anschlussvorrichtung 6 geführt. Die zweite Anschlussvorrichtung 6 ist in diesem Beispiel mit einem Fahrzeug 101 verbunden. Das Fahrzeug 101 umfasst eine Wandervorrichtung. In diesem Ausführungsbeispiel ist die erste Wandlervorrichtung eine Brennstoffzelle 3. Es ist alternativ auch möglich, dass die erste Wandlervorrichtung ein Verbrennungsmotor ist. Ein weiterer Teil des Wasserstoffs 2 wird in die Brennstoffzelle 3 geführt. In der Brennstoffzelle 3 wird der Wasserstoff 2 mit einem Oxidationsmittel, insbesondere mit Luft, in elektrische Energie umgewandelt. Die elektrische Energie wird anschließend über eine erste Anschlussvorrichtung 5 als Gleichstrom in ein Fahrzeug 100 mit Elektrobatterie geführt. Vorteilhaft können somit sowohl Fahrzeuge mit Batterie 100 als auch Fahrzeuge mit einer Brennstoffzelle 101 an der Betankungsvorrichtung 1 geladen, bzw. getankt, werden, wobei in die Betankungsvorrichtung 1 lediglich Wasserstoff 2 zugeführt wird.

Figur 2 zeigt eine Betankungsvorrichtung 1 mit einer Brennstoffzelle 3 und einem Gleichrichter 9. Die Betankungsvorrichtung 1 umfasst weiterhin eine einen ersten Eingang 7 für Wasserstoff 2. Die Betankungsvorrichtung 1 umfasst auch einen zweiten Eingang 8 für das Einspeisen elektrischer Energie in Form von Wechselstrom aus dem Stromnetz die Betankungsvorrichtung 1. In der Brennstoffzelle 3 kann wiederum der Wasserstoff 2 mit einem Oxidationsmittel in elektrische Energie 4 umgewandelt werden. Die elektrische Energie, die als Wechselstrom aus dem Stromnetz in die Betankungsvorrichtung 1 geführt wird, wird in einem Gleichrichter 9 von Wechselstrom zu Gleichstrom gewandelt. Die Brennstoffzelle 3 verlässt ebenso elektrische Energie 4 in Form von Gleichstrom. An der ersten Anschlussvorrichtung 5 kann ein Fahrzeug angeschlossen werden, welches mit elektrischem Gleichstrom ladbar ist. Insbesondere sind dies Elektrofahrzeuge mit Batterie.

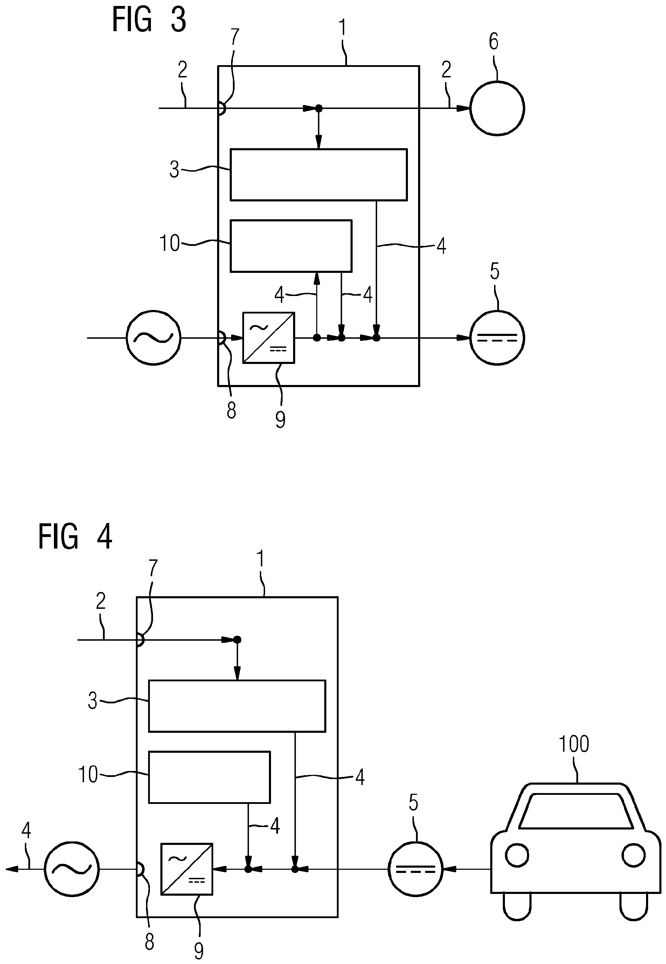

Figur 3 zeigt eine Betankungsvorrichtung 1 mit einer Brennstoffzelle 3 und einer Batterie 10. Weiterhin umfasst die Betankungsvorrichtung 1 einen Gleichrichter 9. Dieses Ausführungsbeispiel ist analog zum Ausführungsbeispiele Figur 2 aufgebaut. Zusätzlich umfasst die Betankungsvorrichtung 1 in diesem Beispiel eine Batterie 10. Ein elektrischer Speicher, in diesem Fall eine Batterie 10, ermöglicht das Zwischenspeichern elektrischer Energie. Vorteilhaft kann mit dem Einsatz der Batterie verhindert werden, dass kurzfristige Lastspitzen, insbesondere beim Laden von wenigstens einem Fahrzeug mit insbesondere bis zu 500 kW Ladeleistung, auftreten.

Figur 4 zeigt ein weiteres Ausführungsbeispiel mit einer Betankungsvorrichtung 1 mit einer Brennstoffzelle 3 und einer Batterie 10. Der Aufbau dieser Betankungsvorrichtung 1 ist analog zum Ausführungsbeispiel der Figur 3. Es unterscheidet sich aber das Verfahren zum Betreiben der Betankungsvorrichtung 1. In diesem Beispiel ist ein Fahrzeug 100 umfassend eine Batterie über die erste Anschlussvorrichtung 5 mit der Betankungsvorrichtung 1 verbunden. Um kurzfristig elektrische Energie für das Stromnetz zur Netzstabilisierung bereitzustellen, kann elektrische Energie aus dem Fahrzeug und/oder der Batterie 10 der Betankungsvorrichtung 1 in den Gleichrichter 9 geführt werden, wobei der Gleichrichter 9 in diesem Fall als Wechselrichter fungiert, von wo aus die elektrische Energie in das Stromnetz gespeist werden kann.

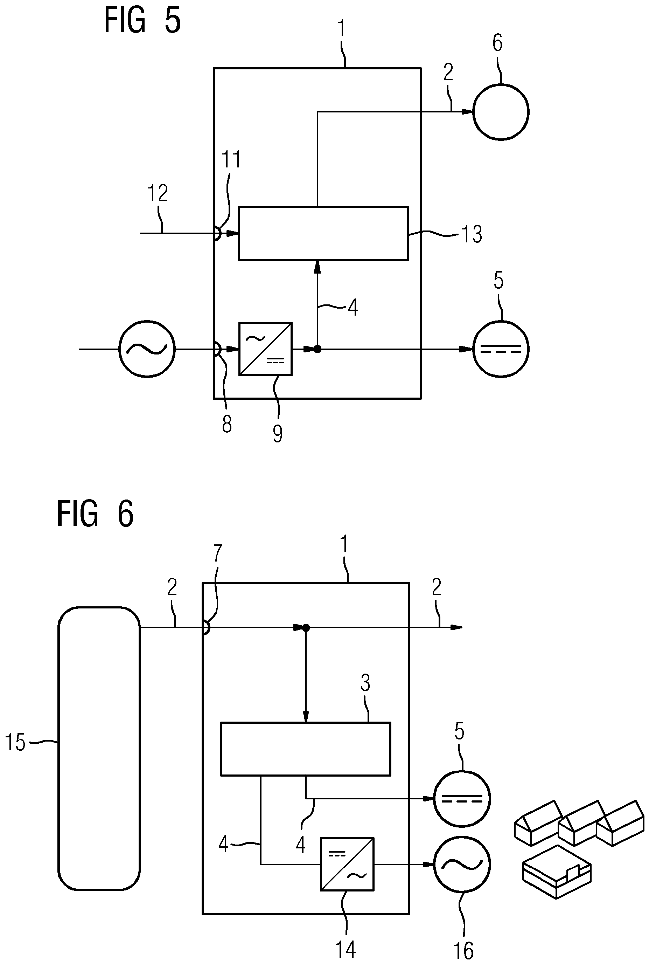

Figur 5 zeigt eine Betankungsvorrichtung 1 mit einer Wasser-Elektrolysevorrichtung 13 und einem Gleichrichter 9. In der Wasser-Elektrolysevorrichtung 13 wird das Wasser 12 mittels der elektrischen Energie 4 zu Wasserstoff 2 und Sauerstoff umgesetzt. Der Betankungsvorrichtung 1 wird Wasser 12 als Edukt für die Wasser-Elektrolysevorrichtung 13 zugeführt. Außerdem wird der Betankungsvorrichtung 1 elektrische Energie zugeführt, wobei die elektrische Energie zunächst im Gleichrichter 9 von Wechselstrom zu Gleichstrom umgewandelt wird. Der Wasserstoff 2 kann wiederum direkt zu einer zweiten Anschlussvorrichtung 6 für ein Fahrzeug geführt werden. Das Zuführen und Speichern von Wasserstoff in der Betankungsvorrichtung 1 kann in dieser Ausführung vermieden werden. Der Sauerstoff kann als Drucksauerstoff und/oder als Flüssisauerstoff gelagert werden und einer weiteren Verwendung zugeführt werden.

Figur 6 zeigt eine Betankungsvorrichtung 1 mit einer Brennstoffzelle 1 und einem ersten Eingang 7 für Wasserstoff 2. Der erste Eingang 7 für Wasserstoff 2 ist mit einem Wasserstofftank 15 fest verbunden. Einen weiteren Eingang weist diese Ausführung die Betankungsvorrichtung 1 nicht auf. In der Betankungsvorrichtung 1 wird der Wasserstoff 2 in der Brennstoffzelle 3 mittels Luft in elektrische Energie umgewandelt. Diese verlässt die Betankungsvorrichtung 1 über die erste Anschlussvorrichtung 5 direkt. Alternativ wird die elektrische Energie in einem Wechselrichter 14 zu Wechselstrom umgewandelt und anschließend elektrischen Verbrauchern zur Verfügung gestellt. Diese elektrischen Verbraucher können insbesondere Häuser, Wohnungen oder kleine industrielle Betriebe sein. Weiterhin kann die elektrische Energie für die Stromversorgung der Telekommunikationssysteme eingesetzt werden. Vorteilhaft wird somit lediglich Wasserstoff 2 benötigt, um Fahrzeuge oder andere Verbraucher mit Wasserstoff 2 und mit elektrischer Energie 4 zu versorgen.

### Bezugszeichenliste

- 1: Betankungsvorrichtung
- 2: Wasserstoff
- 3: Brennstoffzelle
- 4: elektrische Energie
- 5: erste Anschlussvorrichtung Gleichstrom
- 6: zweite Anschlussvorrichtung
- 7: erster Eingang
- 8: zweiter Eingang
- 9: Gleichrichter
- 10: Batterie
- 11: dritter Eingang
- 12: Wasser
- 13: Wasser-Elektrolysevorrichtung
- 14: Wechselrichter
- 15: Wasserstofftank
- 16: zweite Anschlussvorrichtung Wechselstrom
- 100: Fahrzeug mit Batterie
- 101: Fahrzeug mit Brennstoffzelle

## Patentansprüche

1. Betankungsvorrichtung (1) zum Betanken eines Fortbewegungsmittels umfassend:
- wenigstens einen ersten Eingang (7) für einen stofflichen Energieträger und/oder wenigstens einen zweiten Eingang (8) für elektrische Energie (4),
- wenigstens eine erste Wandlervorrichtung zum Wandeln des stofflichen Energieträgers in elektrische Energie (4) und/oder wenigstens eine zweite Wandlervorrichtung zum Wandeln eines Edukts mittels elektrischer Energie (4) in den stofflichen Energieträger,
- wenigstens eine erste, mit dem Fortbewegungsmittel verbindbare, Anschlussvorrichtung (5) zum Übertragen elektrischer Energie,
- wenigstens einen zweite, mit dem Fortbewegungsmittel verbindbare, Anschlussvorrichtung (6) zum Überführen eines synthetischen Kraftstoffs umfassend den stofflichen Energieträger in das Fortbewegungsmittel.

2. Betankungsvorrichtung (1) nach Anspruch 1, wobei der stoffliche Energieträger Wasserstoff (2) ist.

3. Betankungsvorrichtung (1) nach Anspruch 2, wobei die erste Wandlervorrichtung eine Brennstoffzelle (3) ist.

4. Betankungsvorrichtung (1) nach einem der vorhergehenden Ansprüche, wobei das Edukt Wasser (12) ist und wobei die zweite Wandlervorrichtung eine Wasser-Elektrolysevorrichtung (13) zum elektrochemischen Zerlegen von Wasser (12) in Wasserstoff (2) und Sauerstoff ist.

5. Betankungsvorrichtung (1) nach einem der vorhergehenden Ansprüche mit einem Stromrichter.

6. Betankungsvorrichtung (1) nach Anspruch 5, wobei der Stromrichter ein Wechselrichter (14) ist.

7. Betankungsvorrichtung (1) nach Anspruch 5, wobei der Stromrichter ein Gleichrichter (9) ist.

8. Betankungsvorrichtung (1) nach einem der vorhergehenden Ansprüche mit einer ersten Speichervorrichtung für elektrische Energie (4).

9. Betankungsvorrichtung (1) nach Anspruch 8, wobei die erste Speichervorrichtung eine Batterie (10) ist.

10. Betankungsvorrichtung (1) nach einem der vorhergehenden Ansprüche mit einer zweiten Speichervorrichtung (15) zum Speichern des synthetischen Kraftstoffs.

11. Verfahren zum Betreiben einer Betankungsvorrichtung (1) zum Betanken eines Fortbewegungsmittels mit folgenden Schritten:
- Bereitstellen der Betankungsvorrichtung (1) mit wenigstens einem ersten Eingang (7) für einen stofflichen Energieträger und/oder wenigstens einem zweiten Eingang (8) für elektrische Energie (4), wenigstens eine erste Wandlervorrichtung zum Wandeln des stofflichen Energieträgers in elektrische Energie (4) und/oder wenigstens eine zweite Wandlervorrichtung zum Wandeln eines Edukts mittels elektrischer Energie (4) in den stofflichen Energieträger, mit wenigstens einer ersten, mit dem Fortbewegungsmittel verbindbaren, Anschlussvorrichtung (5) zum Übertragen elektrischer Energie (4), mit wenigstens einem zweiten, mit dem Fortbewegungsmittel verbindbaren, Anschlussvorrichtung (6) zum Überführen eines synthetischen Kraftstoffs umfassend den stofflichen Energieträger in das Fortbewegungsmittel,
- Zuführen eines stofflichen Energieträgers in den ersten Eingang (7) und/oder
- Zuführen von elektrischer Energie (4) in den zweiten Eingang (8),
- Verbinden wenigstens eines Fortbewegungsmittels mit der Betankungsvorrichtung (1) über die erste und/oder zweite Anschlussvorrichtung (5, 6),
- Übertragen von elektrischer Energie (4) und/oder von synthetischem Kraftstoff in das Fortbewegungsmittel.

12. Verfahren nach Anspruch 11, wobei mittels einer Brennstoffzelle (3) Wasserstoff (2) als erster Energieträger zu elektrischer Energie umgewandelt wird.

13. Verfahren nach Anspruch 11 oder 12, wobei mittels eines Elektrolyseurs (13) Wasser (12) zu Wasserstoff (2) und Sauerstoff elektrochemisch gespalten wird.

14. Verfahren nach einem der Ansprüche 11 bis 13, wobei nach dem Verbinden des Fortbewegungsmittels (101) mit der Betankungsvorrichtung (1) ein Energiespeicher, insbesondere eine Batterie (10), des Fortbewegungsmittels (101) zur Stabilisierung eines Stromnetzes entleert wird.
